# EUROPÄISCHE PATENTSCHRIFT

(11) **EP 1 748 183 B1**
(45) Veröffentlichungstag und Bekanntmachung des Hinweises auf die Patenterteilung: **06.06.2012**
(21) Anmeldenummer: 06012699.2
(22) Anmeldetag: 21.06.2006
(51) Int. Cl.: F03D 7/02, F03D 9/02

(54) **Elektrische Einrichtung zur Verstellung der Rotorblätter einer Windenergieanlage**
Electrical device for wind turbine rotor blade pitch adjustment
Dispositif électrique de réglage des aubes de rotor d'une éolienne

(30) Priorität: 28.07.2005 DE 20512040 U
(43) Veröffentlichungstag der Anmeldung: 31.01.2007
(73) Patentinhaber: W2E Wind to Energy GmbH, 18230 Ostseebad Rerik (DE)
(72) Erfinder: Schütt, Torsten, Dr., 18198 Stäbelow (DE); Puchert, Jens, 18057 Rostock (DE)
(74) Vertreter: Siekmann, Gunnar

(56) Entgegenhaltungen:
- WO-A-01/74703
- DE-A1- 10 335 575
- DE-A1- 10 338 127
- US-A- 5 907 192

## Beschreibung

Die Erfindung betrifft eine elektrische Einrichtung zur Verstellung der Rotorblätter einer Windenergieanlage mit wenigstens einem Stellantrieb, einem den Stellantrieb versorgenden Netzteil sowie einem dem Stellantrieb zugeordneten Energiespeicher.

Es ist bekannt, daß die Rotorblätter einer Windenergieanlage zur Drehzahlregelung und zum aerodynamischen Bremsen mit hydraulischen Verstelleinrichtungen ausgerüstet sind. Bei Ausfall des elektrischen Versorgungsnetzes muß den Pumpen der Verstelleinrichtungen Energie aus einem Speicher zur Verfügung gestellt werden. Dazu werden mechanische, hydraulische, chemische oder elektrische Energiespeicher verwendet.

Bei elektrischen Verstelleinrichtungen, die elektrische Stellantriebe und Motoren aufweisen, werden vornehmlich Akkumulatoren verwendet, die mittels separat angeordneter Ladeeinrichtungen aufgeladen und bei Ausfällen des Versorgungsnetzes und anderen Bedarfsfällen hinzugeschaltet werden. Neuerdings werden für elektrische Verstelleinrichtungen jedoch auch Kondensatoren verwendet, die ebenfalls mittels separat angeordneter Ladeeinrichtungen aufgeladen und bei Netzausfall oder in anderen Bedarfsfällen zur Versorgung der Verstelleinrichtungen hinzugeschaltet werden. Kondensatoren werden seit vielen Jahren in indirekten Umrichtern mit Gleichstrom-Zwischenkreis für Antriebsaufgaben verschiedener Art verwendet.

Der Nachteil von als Blei-Akkumulatoren ausgebildeten Energiespeichern besteht in ihrer begrenzten Lebensdauer, dem Wartungsaufwand, dem Leistungsabfall bei tiefen Temperaturen, dem begrenzten Leistungsaufnahme- und Leistungsabgabevermögen und dem sich zeitlich verändernden Verhalten beim Laden und Entladen. Bei den bekannten elektrischen Einrichtungen müssen die Energiespeicher deshalb vom Stellantrieb getrennt von separaten Ladeeinrichtungen geladen werden. Dazu verfügen die Ladeeinrichtungen über teure Meß-, Steuer- und Schalteinheiten mit einem aufwendigen Lademanagement. Für Betriebsfälle, die ein Abbremsen der Stellantriebe der Rotorblätter erfordern, ist es bekannt, nachteilig schwere sowie großvolumige Widerstände einzusetzen, in welchen überschüssige, nicht nutzbare mechanische Energie in Wärme umgesetzt wird.

Eine elektrische Einrichtung nach dem Stand der Technik ist in DE 103 35575 A beschrieben.

Der Erfindung liegt die Aufgabe zugrunde, eine elektrische Einrichtung der eingangs genannten Gattung aufzuzeigen, mit der auf den Einsatz von Ladeeinrichtungen verzichtet werden kann.

Diese Aufgabe ist erfindungsgemäß durch eine Vorrichtung mit den Merkmalen des Patentanspruchs 1 gelöst. Vorteilhafte Weiterbildungen der Erfindung sind in den Unteransprüchen angegeben.

Die erfindungsgemäße elektrische Einrichtung ist derart angeordnet, daß zwischen dem Stellantrieb und dem Netzteil ein Gleichstrom-Zwischenkreis ausgebildet ist, und daß der Energiespeicher an den Gleichstrom-Zwischenkreis angeschlossen ist. Somit bildet der Energiespeicher eine Zwischenkreiseinheit aus, die sowohl mit dem Netzteil als auch mit dem Stellantrieb direkt verbunden bzw. parallel geschaltet ist. Damit entfallen aufwendige Umschaltprozesse, so daß auf den Einsatz teurer Meß-, Steuer- und Schalteinheiten sowie aufwendiger Lademagement-Systeme vorteilhaft verzichtet werden kann. Über diese Parallelverbindung kann der Energiespeicher gleichzeitig mit dem Netzteil betrieben werden, so daß kurzzeitig benötigte Leistungsspitzen aus dem Energiespeicher entnommen werden können. Als überaus großer Vorteil ergibt sich daraus, daß das Netzteil nicht für Spitzenlasten ausgelegt werden muß und somit besonders kostengünstig herstellbar ist. Auf den Einsatz technisch aufwendiger und separat angeordneter Ladeeinrichtungen mit einem Lademanagement kann vorteilhaft verzichtet werden. Der Gleichstrom-Zwischenkreis kann auch als Gleichspannungs-Zwischenkreis bezeichnet werden.

Nach der Erfindung weist das Netzteil einen Transformator auf. Mit diesem wird die über das Bordnetz vom Generator der Windenergieanlage oder vom Netz eines anderen Energieversorgers zur Verfügung gestellte Eingangsspannung auf eine für den Stellantrieb geeignete Ausgangsspannung heruntertransformiert. Die Eingangsspannung beträgt in der Regel 400 Volt und die im Gleichstrom-Zwischenkreis vorherrschende Ausgangsspannung beträgt beispielsweise 90 Volt.

Nach der Erfindung ist der Gleichstrom-Zwischenkreis zwischen einem in das Netzteil integrierten Gleichrichter und einem dem Stellantrieb vorgeschalteten Wechselrichter ausgebildet. Der Gleichrichter ist über entsprechende Steuer- und Regeleinrichtungen mit dem Transformator des Netzteils verbunden, so daß insgesamt ein Netzteil geschaffen ist, das als eine Art Konstantstromquelle mit Spannungsbegrenzung fungiert. Das heißt, daß das Netzteil die am Gleichstrom-Zwischenkreis anliegende Ausgangsspannung bis zur Abnahme eines vorbestimmten Nennstromes konstant hält. Wird der Nennstrom überschritten, fällt die am Gleichstrom-Zwischenkreis anliegende Ausgangsspannung ab.

Es wird vorgeschlagen, daß der Energiespeicher wenigstens einen Akkumulator aufweist. Akkumulatoren werden auch als chemische Speicher bezeichnet, bei deren Aufladung chemische Reaktionen ablaufen, die bei der Entladung in umgekehrter Richtung ablaufen. Zur Schonung und Pflege des Akkumulators sollte dieser im aufgeladenen Zustand vom Gleichstrom-Zwischenkreis entkoppelt werden. Dazu ist vorgesehen, daß dem Akkumulator ein Grenzwertschalter zugeordnet ist, der als eine Art Entkopplungsglied fungiert. Dieser sorgt dafür, daß der Akkumulator nur dann entladen wird, wenn am Netzteil der Nennstrom abgeführt wird und am Gleichstrom-Zwischenkreis ein deutlicher Spannungsabfall eintritt. In diesem Fall übernimmt der Akkumulator die Stromversorgung des Stellantriebes.

Nach einer besonders einfachen und kostengünstigen Weiterbildung der Erfindung weist der Grenzwertschalter zwei antiparallel geschaltete Dioden auf. Mit den Dioden ist sichergestellt, daß der Akkumulator erst ab einer vorbestimmten Spannungsdifferenz zu arbeiten beginnt. Auf diese Weise werden kurze Auflade- und Entladevorgänge unterdrückt, so daß die Lebensdauer der Akkumulatoren vorteilhaft erhöht ist.

Von erheblichem Vorteil ist es, wenn der Akkumulator als Litium-lonen-Akkumulator ausgebildet ist. Diese neuartigen Akkumulatoren haben einen geringen Wartungsaufwand, einen geringen Leistungsabfall bei niedrigen Temperaturen, ein hohes Leistungsaufnahme- und Leistungsabgabevermögen, das heißt kurze Lade- und Entladezeiten und ein nahezu konstantes Verhalten, beim Laden sowie beim Entladen. Diese Eigenschaften machen die neuartigen Litium-lonen-Akkumulatoren besonders für den Einsatz in der erfindungsgemäßen elektrischen Einrichtung geeignet.

Nach einer anderen Weiterbildung der Erfindung wird vorgeschlagen, daß der Energiespeicher wenigstens einen Kondensator aufweist. Heute erhältliche Kondensatoren, die zu den elektrischen Speichern gehören, werden mit Speichergrößen angeboten, mit denen die Kondensatoren bereits an Stelle von Akkumulatoren eingesetzt werden können. Kondensatoren haben vorteilhaft kurze Ladezeiten und eine überaus hohe Lebensdauer. Außerdem benötigen Kondensatoren keine Grenzwertschalter, da sich ihre Spannung während des Aufladens und während des Entladens ständig ändert. Damit fungiert der Kondensator in der erfindungsgemäßen elektrischen Einrichtung als eine Art Puffer, mit dem Spitzenlasten abgefangen werden können und eine zeitlich begrenzte Notstromversorgung gewährleistet ist. Selbstverständlich liegt es im Rahmen der Erfindung, daß der Energiespeicher Kondensatoren und Akkumulatoren aufweist.

Um den Wirkungsgrad der erfindungsgemäßen elektrischen Einrichtung zu verbessern, ist vorgesehen, daß der Stellantrieb als ein Energiewandler mit Motor- und Generatorfunktion ausgebildet ist. Ein derart ausgebildeter Stellantrieb bietet in bestimmten Betriebszuständen, insbesondere beim Abbremsen der Rotorblätter die Möglichkeit, die mechanische, nicht nutzbare Energie aus dem Rotorblatt in elektrische Energie umzuwandeln. Dazu ist das Netzteil so eingestellt, daß der Energiespeicher einerseits nur im Fall einer Versorgungsunterbrechung des Versorgungsnetzes oder bei kurzzeitig hohen Lasten des Stellantriebes beansprucht wird und andererseits als Senke für aus dem Rotorblatt der Windenergieanlage zurückgespeiste elektrische Energie fungiert. Auf großvolumige und schwere Widerstände, in welchen überschüssige, für den Ladevorgang nicht benötigte Energie in Wärme umgesetzt wird sowie auf technisch aufwendige Ladegeräte kann mit Vorteil verzichtet werden.

Eigenständiger Schutz wird für eine Windenergieanlage beansprucht, die mit der erfindungsgemäßen elektrischen Einrichtung zur Verstellung der Rotorblätter ausgerüstet ist.

Ein Ausführungsbeispiel der Erfindung, aus dem sich weitere erfinderische Merkmale ergeben, ist in der Zeichnung dargestellt. Es zeigen:
- Fig. 1:: eine schematische Darstellung einer erfindungsge- mäßen elektrischen Einrichtung zur Verstellung der Rotorblätter einer Windenergieanlage;
- Fig. 2:: einen prinzipiellen Aufbau des Energiespeichers zur Verwendung in einer elektrischen Einrichtung gemäß Fig. 1 in einem ersten Ausführungsbeispiel; und
- Fig. 3:: einen prinzipiellen Aufbau eines Energiespeichers zur Verwendung in einer elektrischen Einrichtung gemäß Fig. 1 in einem zweiten Ausführungsbeispiel.

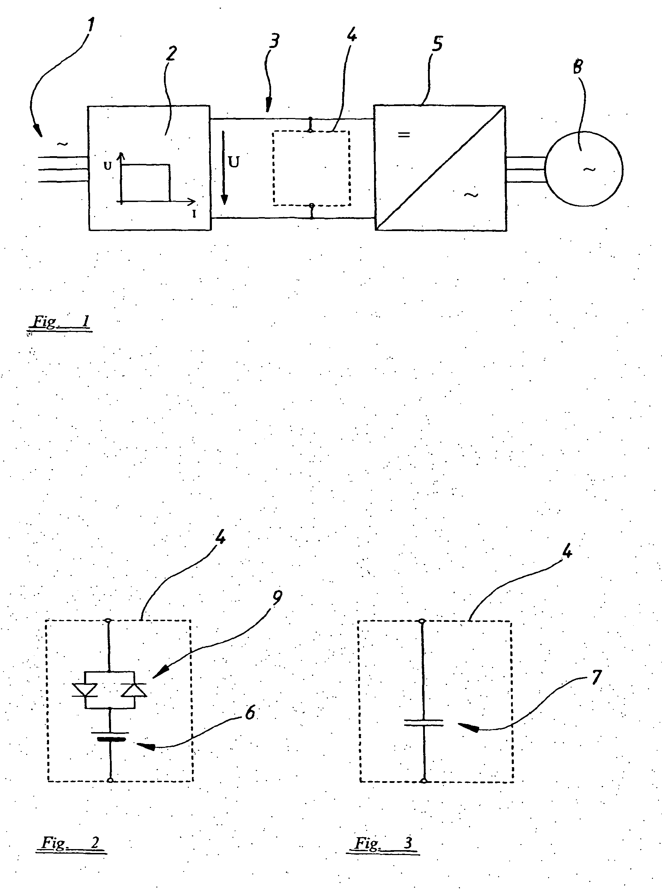

Die Figur 1 zeigt die erfindungsgemäße elektrische Einrichtung mit einem als Drehstrommotor ausgebildeten Stellantrieb 8 zur Verstellung der Rotorblätter einer Windenergieanlage. Der Stellantrieb 8 wird von einem Netzteil 2 sowie einem Energiespeicher 4 versorgt. Zwischen dem Stellantrieb 8 und dem Netzteil 2 ist ein Gleichstrom-Zwischenkreis 3 ausgebildet, an welchem der Energiespeicher 4 angeschlossen ist. Der Gleichstrom-Zwischenkreis 3 ist von einem in das Netzteil 2 integrierten Gleichrichter (nicht dargestellt) sowie einem dem Stellantrieb 8 vorgeschalteten Wechselrichter 5 begrenzt. Das Netzteil 2 weist einen Transformator auf, über welchen das Netzteil 2 eingangsseitig mit einem 3-phasigen Versorgungsnetz 1 der Windenergieanlage verbunden ist. Der Stellantrieb 8 ist als ein rückspeisefähiger Energiewandler mit Generatorfunktion ausgebildet. Das Netzteil 2 ist hingegen nicht rückspeisefähig.

Die Figur 2 zeigt den prinzipiellen Aufbau des Energiespeichers 4 in einem ersten Ausführungsbeispiel. Der Energiespeicher 4 weist einen Akkumulator 6 auf, dem ein Grenzwertschalter 9 zugeordnet ist. Der aus zwei antiparallel geschalteten Dioden bestehende Grenzwertschalter 9 sorgt dafür, daß der Akkumulator 6 nur dann entladen wird, wenn das Netzteil 2 an den Gleichstrom-Zwischenkreis 3 einen Nennstrom abgibt und darüber hinaus die am Gleichstrom-Zwischenkreis 3 anliegende Ausgangsspannung abfällt. In diesem Fall kommutiert die Stromversorgung vom Netzteil 2 auf den Energiespeicher 4. Die vom Netzteil 2 bereitgestellte Ausgangsspannung ist auch die Ladeschlußspannung des Akkumulators 6, der als Litium-lonen-Akkumulator ausgebildet ist. Der Stellantrieb 8 ist als ein Energiewandler mit Motor- und Generatorfunktion ausgebildet, so daß elektrische Energie aus dem Stellantrieb 8 über den dann als Gleichrichter fungierenden Wechselrichter 5 in den Gleichstrom-Zwischenkreis 3 zurückgespeist und der Akkumulator 6 elektrische Energie aufnehmen kann.

Die Figur 3 zeigt den prinzipiellen Aufbau des Energiespeichers 4 in einem zweiten Ausführungsbeispiel. Hier weist der Energiespeicher 4 lediglich einen Kondensator 7 auf. Gleiche Bauteile sind mit gleichen Bezugszahlen versehen.

## Patentansprüche

1. Elektrische Einrichtung zur Verstellung der Rotorblätter einer Windenergieanlage, mit wenigstens einem Stellantrieb (8), einem den Stellantrieb (8) versorgenden Netzteil (2) sowie einem dem Stellantrieb (8) zugeordneten Energiespeicher (4), wobei zwischen dem Stellantrieb (8) und dem Netzteil (2) ein Gleichstrom-Zwischenkreis (3) ausgebildet ist, und der Energiespeicher (4) an den Gleichstrom-Zwischenkreis (3) angeschlossen ist, wobei der Gleichstrom-Zwischenkreis (3) zwischen einem in das Netzteil (2) integrierten Gleichrichter und einem dem Stellantrieb (8) vorgeschalteten Wechselrichter (5) ausgebildet ist,
**dadurch gekennzeichnet,**
**dass** das Netzteil (2) einen Transformator aufweist, und
**dass** der Gleichrichter über Steuer- und Regeleinrichtungen mit dem Transformator verbunden ist.

2. Elektrische Einrichtung nach Anspruch 1, **dadurch gekennzeichnet, dass** der Energiespeicher (4) wenigstens einen Akkumulator (6) aufweist.

3. Elektrische Einrichtung nach Anspruch 2, **dadurch gekennzeichnet, dass** dem Akkumulator (6) ein Grenzwertschalter (9) zugeordnet ist.

4. Elektrische Einrichtung nach Anspruch 3, **dadurch gekennzeichnet, dass** der Grenzwertschalter (9) zwei antiparallel geschaltete Dioden aufweist.

5. Elektrische Einrichtung nach einem der Ansprüche 2 bis 4, **dadurch gekennzeichnet, dass** der Akkumulator (6) als Lithium-Ionen-Akkumulator ausgebildet ist.

6. Elektrische Einrichtung nach einem der Ansprüche 1 bis 5, **dadurch gekennzeichnet, dass** der Energiespeicher (4) wenigstens einen Kondensator (7) aufweist.

7. Elektrische Einrichtung nach einem der Ansprüche 1 bis 6, **dadurch gekennzeichnet, dass** der Stellantrieb (8) als ein Energiewandler mit Motor- und Generatorfunktion ausgebildet ist.

8. Windenergieanlage mit einer elektrischen Einrichtung zur Verstellung von Rotorblättern gemäß einem der vorhergehenden Ansprüche.

## Claims

1. An electrical device for purposes of adjusting the rotor blades of a wind power plant, with at least one actuator (8), a power supply unit (2) supplying the actuator (8), and also an energy store (4) assigned to the actuator (8), wherein
an intermediate DC circuit (3) is designed between the actuator (8) and the power supply unit (2), and the energy store (4) is connected to the intermediate DC circuit (3), wherein
the intermediate DC circuit (3) is designed between a rectifier integrated into the power supply unit (2) and an inverter (5) introduced into the circuit ahead of the actuator (8),
**characterised in that**,
the power supply unit (2) has a transformer, and
**in that** the rectifier is connected with the transformer via control and regulation equipment.

2. The electrical device in accordance with claim 1, **characterised in that**, the energy store (4) has at least one accumulator (6).

3. The electrical device in accordance with claim 2, **characterised in that**, a limit switch (9) is assigned to the accumulator (6).

4. The electrical device in accordance with claim 3, **characterised in that**, the limit switch (9) has two diodes introduced in anti-parallel into the circuit.

5. The electrical device in accordance with one of the claims 2 to 4, **characterised in that**, the accumulator (6) is designed as a lithium-ion accumulator.

6. The electrical device in accordance with one of the claims 1 to 5, **characterised in that**, the energy store (4) has at least one capacitor (7).

7. The electrical device in accordance with one of the claims 1 to 6, **characterised in that**, the actuator (8) is designed as an energy converter with a motor function and a generator function.

8. A wind power plant with an electrical device for purposes of adjusting the rotor blades in accordance with one of the preceding claims.

## Revendications

1. Dispositif électrique de réglage des aubes de rotor d'une éolienne, comportant au moins un servomoteur (8), un bloc d'alimentation électrique (2) alimentant le servomoteur (8) ainsi que un accumulateur d'énergie (4) coordonné au servomoteur (8), dans lequel entre le servomoteur (8) et le bloc d'alimentation électrique (2) un circuit intermédiaire à courant continu (3) est réalisé, et l'accumulateur d'énergie (4)est raccordé au circuit intermédiaire à courant continu (3),
dans lequel le circuit intermédiaire à courant continu (3) est réalisé entre un redresser intégré au bloc d'alimentation électrique (2) et un onduleur (5) branché en amont du servomoteur (8),
**caractérisé en ce que**
le bloc d'alimentation électrique (2) présente un transformateur et
le redresseur est relié par l'intermédiaire de dispositifs de commande et de régulation au transformateur.

2. Dispositif électrique selon la revendication 1, **caractérisé en ce que** l'accumulateur d'énergie (4) présente au moins un accumulateur (6).

3. Dispositif électrique selon la revendication 2, **caractérisé en ce que** l'accumulateur (6) est coordonné à un interrupteur détecteur de seuil (9).

4. Dispositif électrique selon la revendication 3, **caractérisé en ce que** l'interrupteur détecteur de seuil (9) présente deux diodes branchées de manière antiparallèle.

5. Dispositif électrique selon une des revendications 2 à 4, **caractérisé en ce que** l'accumulateur (6) est réalisé comme un accumulateur aux ions lithium.

6. Dispositif électrique selon une des revendications 1 à 5, **caractérisé en ce que** l'accumulateur d'énergie (4) présente au moins un condensateur (7).

7. Dispositif électrique selon une des revendications 1 à 6, **caractérisé en ce que** le servomoteur (8) est réalisé comme un convertisseur d'énergie avec fonction de moteur et de générateur.

8. Eolienne comportant un dispositif électrique de réglage des aubes de rotor selon une des revendications précédentes.
